**Europäisches Patentamt**

**European Patent Office**

**Office européen des brevets**

(11) Publication number: **0 103 493**
**B1**

(12) **EUROPEAN PATENT SPECIFICATION**

(45) Date of publication of patent specification: **16.12.87**    (51) Int. Cl.⁴: **G 11 B 5/55**

(21) Application number: **83305403.4**

(22) Date of filing: **15.09.83**

(54) **Improved bang-bang controlled velocity command generator.**

(30) Priority: **15.09.82 US 418508**

(43) Date of publication of application:
**21.03.84 Bulletin 84/12**

(45) Publication of the grant of the patent:
**16.12.87 Bulletin 87/51**

(84) Designated Contracting States:
**DE FR GB IT NL SE**

(56) References cited:
**EP-A-0 007 449**
**EP-A-0 007 638**
**EP-A-0 063 936**
**EP-A-0 069 549**
**US-A-4 239 942**

(73) Proprietor: **AMPEX CORPORATION**
**401 Broadway M.S. 3-35**
**Redwood City California 94063-3199 (US)**

(72) Inventor: **Lee, Patrick Siu-Kee**
**3966 Acapulco Drive**
**Campbell California (US)**

(74) Representative: **Horton, Andrew Robert Grant et al**
**BOULT, WADE & TENNANT 27 Furnival Street London, EC4A 1PQ (GB)**

Courier Press, Leamington Spa, England.

## Description

This invention relates generally to magnetic disc data storage devices and more particularly to an improved method for the accurate generation of a velocity command profile for the positioning of transducer apparatus relative to a storage medium.

A disc drive typically comprises a disc pack consisting of a plurality of magnetic discs mounted on a common drive spindle. The disc drive further comprises an array of magnetic heads disposed in read/write relation with the discs. In the case of movable head drives, the heads are mounted on an actuator driven carriage mechanism, at least one head being operatively associated with each magnetic surface. In such drives the heads are usually moved substantially radially across the discs to access a desired track on any disc.

Information is stored on a surface of a disc by being recorded thereon in a serial format in concentric rings or tracks known in the art as cylinders. The concentric cylinders are arranged across the surface of a disc with varying radii. The density at which cylinders are placed on a disc vary greatly, from twenty-four tracks per centimetre to more than four hundred tracks per centimetre, depending upon the parameters of a particular system.

A transducer, or read and write transducer assembly of a movable head drive ccoperates with a particular concentric track on a rotating disc as long as the head retains a selected position. That position of the head is also defined as a particular radial position of the transducer(s) therein, relative to the disc's axis. For a change of tracks, the head has to be displaced radially to that axis so that the transducer(s) may lock on another track. In order to minimize the time required to access information on any particular track, the head must be moved as rapidly as possible from its present position to the desired position, for cooperation with the desired track. A rapid displacement of this kind requires the head to be first accelerated as long as possible, and thereafter to be declerated and stopped directly on the new position. Moreover, it is desirable to have the displacement control operation merged in a tracking operation that maintains the transducer and the head assembly in the desired position.

All disc memories have or are characterised by minimum, average and maximum access times. Mimimum access time is the time for one track seek. Maximum access time is the time needed for travelling the maximum seek length. Average access time is the average time needed for any seek length and is equal to the total accumulated seek time for a large number of seeks divided by the total number of seeks. For simplicity of discussion here, the disc drive is characterised by a "mean access time" instead. Mean access time is the time required by the heads, which read from or write upon the magnetic disc, to move from an outside track on the disc and gain access to a data item contained on the central track. The time is measured from the moment the heads receive an order from the processing system to seek a data item. The central track of the disc has a serial number equal to the mean of the outside track serial numbers. For example, if there are two hundred recording tracks numbered from 0 to 200, then the central track is track 100.

In practice, the mean access time is determined primarily by two factors. One is the average time taken by the disc to complete one revolution. The second is the average time taken by the magnetic heads to move from the outside track to the central track.

Much development work has occurred directed towards reducing mean access time. It is, of course, possible to reduce the average revolution time of a disc by increasing the velocity of rotation. However, the mechanical stresses exerted on the disc severely limit this approach. Thus, the preferred approach is to reduce the average time necessary to move the magnetic head by improving the head control apparatus.

It is to be understood that the primary concern is to reduce the time required to move the magnetic heads from a starting track to a destination track, regardless of starting or destination track. Thus, reduction of mean access time, i.e., where the starting and destination tracks are an outside track and the central track, respectively, is a special case and only illustrative of the general objective.

Head control apparatus usually includes a "voice coil" electrodynamic motor. The motor has a coil which moves linearly within a permanent magnet, defining a cylindrical core. The coil is mechanically linked to a carriage which carries the magnetic heads. Preferably, the carriage moves along two parallel rails. The coil, carriage and magnetic heads, in combination, constitute a movable head assembly.

The current supplied to the voice coil is controlled for obtaining a desired velocity profile of the moveable head assembly. Acceleration and deceleration phases are controlled based upon distance still to be travelled and in relation to the actual velocity in any instant; the moving assembly stops in the desired position with the required degree of accuracy by operation of a velocity command signal that reduces to zero as the object approaches the desired position.

In order to minimise the mean access time it is preferable to arrange the drive system i.e. the actuators for the magnetic head to provide constant acceleration up to a peak velocity ($V_p$) and thereafter to control the drive system in accordance with a velocity profile defining the desired velocity of the movable member in terms of its distance from its intended terminal position. The velocity profile is usually parabolic and it has been proposed to employ a diode function generator for the generation of the velocity profile. Such a generator is, however, not very accurate. It has also been proposed to employ a programmable read-only memory (PROM) to store, at addresses corresponding to discrete distances of the member from the terminal position, respective velocity values according to the desired (parabolic) profile. However, the use of a PROM in this manner is, especially when the maximum distance that the member may travel is large, either inaccurate for positions close to the terminal position or quite expensive.

Consequently while a PROM implementation of the square root relationship in a velocity command profile offers superior accuracy to that posssible using a diode-function generator, the shortcomings resulting from the discrete nature of the output signal resulting from such a PROM implementation persist. The only ways which have been previously available to achieve better resolution have been either to increase the size of the PROM, with the attendant increase in cost, or to implement only the terminal portion of the velocity distance curve in increased detail using a PROM, and limiting the velocity command profile to a constant value for the remaining portion of the velocity command profile not implemented in the PROM, detail with the undesirable attendant increase in maximum and mean access times.

With the increase in the number of tracks desired to be stored on a disc, greater accuracy in the velocity command signal is required. Consequently, increasing track densities demands increasing accuracy of the velocity command signal. For a given size PROM, the requirement for increased accuracy of the velocity command signal has been achieved at the expense of maximum and mean access times.

The present invention offers a solution to the above-described problem by allowing the PROM to be devoted to the terminal portion of the square root velocity distance curve without the attendant consequence of a significant decrease in maximum and mean access times.

This objective is achieved by the introduction of additional discrete velocity steps in the velocity commande profile for distances for which prior art velocity command profiles specified a single value for velocity.

It is known from EP—0007449-A1 to provide a velocity profile generator for use in controlling the movement of a movable member from an initial position towards a terminal position, the generator including means (a track difference register) for producing a signal representing the distance of the member away from the terminal position. In the system described in EP—0007449-A1 the track difference register controls a read-only memory to generate digital values defining the velocity profile.

According to one aspect of the invention the velocity profile generator is characterised by means for comparing the signal with predefined distances to provide an indication of the distance as within one of a plurality of ranges of distance, means providing a signal of predetermined value and representing a selected velocity for one of said ranges and means responsive to the indication of range to augment the predetermined value whereby to generate a pre-selected velocity value for the range of distances embracing the actual distance of the member from the terminal position.

Preferably the signal representing the distance of the member away from the terminal position is in digital form and means providing the signal of predetermined value responds to a digital value representing the lower limit of the lowest range of distances.

In a preferred form of the invention, for a final range of distances closest to the terminal position the velocity profile is generated by a digital data store which is addressed according to the signal representing distance away from the terminal position to provide a respective velocity value from a set of stored velocity values. The digital data store may also provide the said signal of predetermined value.

EP—0007449-A1 also describes apparatus for controlling the movement of a movable member towards a terminal position, the apparatus comprising means for producing a signal representing the actual distance of the member from the terminal position, drive means for the member and means for detecting the actual velocity of the member.

According to a further aspect of the invention, such apparatus is characterised by means for comparing the said signal with defined distances and for providing, for each of a plurality of consecutive ranges of distance of the member from the terminal position, a respective selected velocity value and a control arrangement which for each range causes the application of predetermined energisation to the drive means to reduce the velocity of the member to the selected value associated with the range.

Preferably the energisation of the drive means is substantially constant while the velocity of the member is being reduced in any of the said ranges and is reduced to allow the member to maintain the respective selected value of velocity for any remaining part of the range.

For providing the selected velocity value there are preferably provided means for generating a velocity value for the lowest range and means for augmenting the said velocity value, in accordance with a signal denoting which range embraces the actual distance of the member from the terminal position, to provide the respective selected velocity value.

The present invention provides for improved access time and greater accuracy in the digital synthesis of the velocity/distance relationship by providing for the generation of a plurality of additional discrete velocity steps for distances whose corresponding velocity values were in prior practice defined by a single constant velocity value. In such a design, the digital storage means can be restricted to storing the desired velocity/distance relation for the terminal portion of the velocity distance curve with the desired accuracy. A plurality of discrete velocity steps is then generated for distances whose corresponding values for velocity are not stored in the PROM.

Brief description of the figures

Figure 1 is a block diagram of a head carriage position control system, for a disc drive;

Figure 2 illustrates a velocity/distance profile for a velocity command generator in accordance with the present invention;

Figure 3 illustrates waveforms associated with a controlled velocity command generator incorporating the present invention; and

Figure 4 illustrates a controlled velocity command generator in accordance with the present invention.

Detailed description

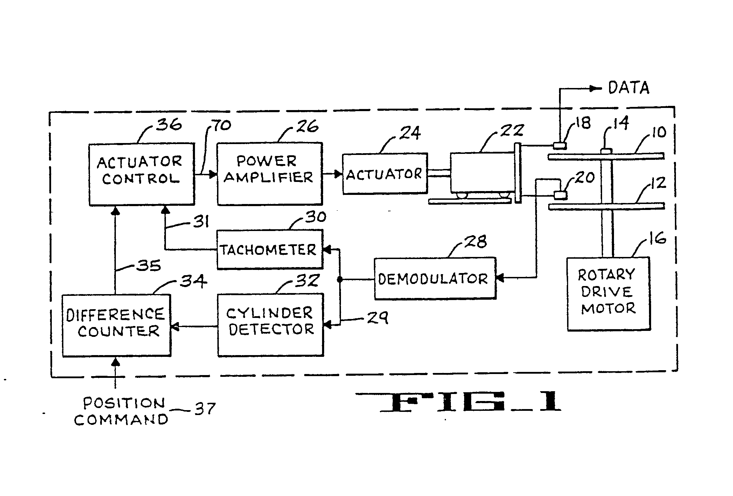

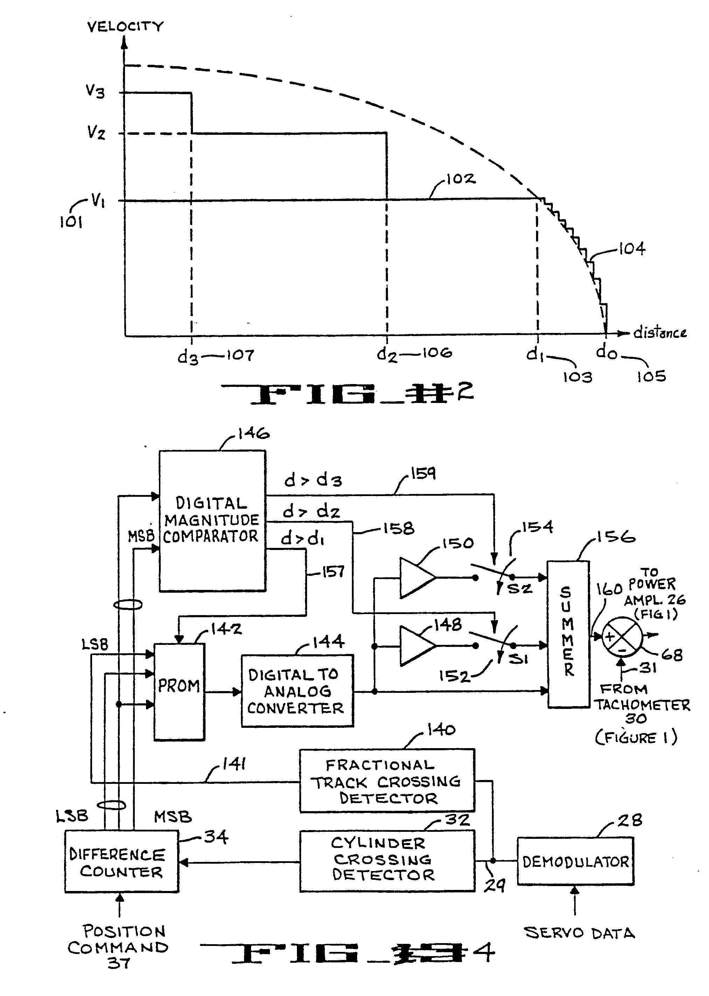

Referring to Figure 1, a disc drive comprises a pair of magnetically coated recording discs 10 and 12 each having a multiplicity of concentrically disposed data recording tracks and being mounted on a shaft 14 which is driven by a rotary drive motor 16. Magnetic read/write heads 18 and 20 are operatively associated with discs 10 and 12 respectively. As the discs are rotated a movable head assembly 22 on which the heads are mounted is moved radially across the discs by an actuator 24 to position the heads over particular data tracks. The actuator 24 may be a voice coil electrodynamic motor, and is energised by a power amplifier 26 to move and stop the movable head assembly. The disc 12 has recorded thereon patterns of information in concentric rings which are used exclusively in connection with head 20 and the associated positioning apparatus to accurately position the head 18 over a desired cylinder of information; the head 20 and the disc 12 are usually called a 'servo data head' and a 'servo data disc' respectively. A typical disc drive usually comprises a plurality of data discs (10) and associated heads (18), arranged in a stack on shaft 14 such that corresponding data tracks of all the data discs are disposed one above the other in cylindrical fashion.

In operation of the disc drive, servo data detected by head 20 is applied to a demodulator 28, which produces a waveform which varies from a minimum value to a maximum value as the head 20 passes over each of the concentric servo data tracks on the disc 12. Consequently the waveform produced by demodulator 28 is representative of linear displacement of the movable head assembly 22, and is applied to a tachometer 30 and a cylinder detector 32. The cylinder detector 32 produces a single pulse for each track or cylinder of servo data which head 20 crosses as the carriage 22 moves the heads 18 and 20 radially across the surfaces of discs 10 and 12. The pulses so produced by cylinder detector 32 are supplied to a difference counter 34 which keeps track of the location of heads 18 and 20 relative to the cylinders of recorded information on discs 10 and 12 by counting the number of cylinder crossings detected by the head 20 as it moves across the servo data disc 12.

Difference counter 24 also receives a position command 37 from an external control system which indicates the desired cylinder over which head 18 is to be positioned for the recording or playback of information. Difference counter 34 thereafter supplies the necessary signal 35 to an actuator control 36 for the subsequent repositioning of movable head assembly 22. Actuator control 36 also receives from tachometer 30 a signal 31 which indicates the actual velocity and direction at which movable head assembly 22 and consequently heads 18 and 20 are currently moving. Based on signals supplied from tachometer 30 and difference counter 34, actuator control 36 generates the necessary command signal for power amplifier 26 to drive actuator 24 to position the head 18 over the desired cylinder on disc 10 in the minimum time. This present invention includes an improved method for the implementation of actuator control 36.

The displacement of the movable head assembly 22 must be very fast and very accurate. Actuator control 36 is designed so that movable head assembly 22 traverses the respective distances in minimum time. This is achieved by controlling the voice coil current in the electric motor used to implement actuator 24 to obtain a particular velocity profile.

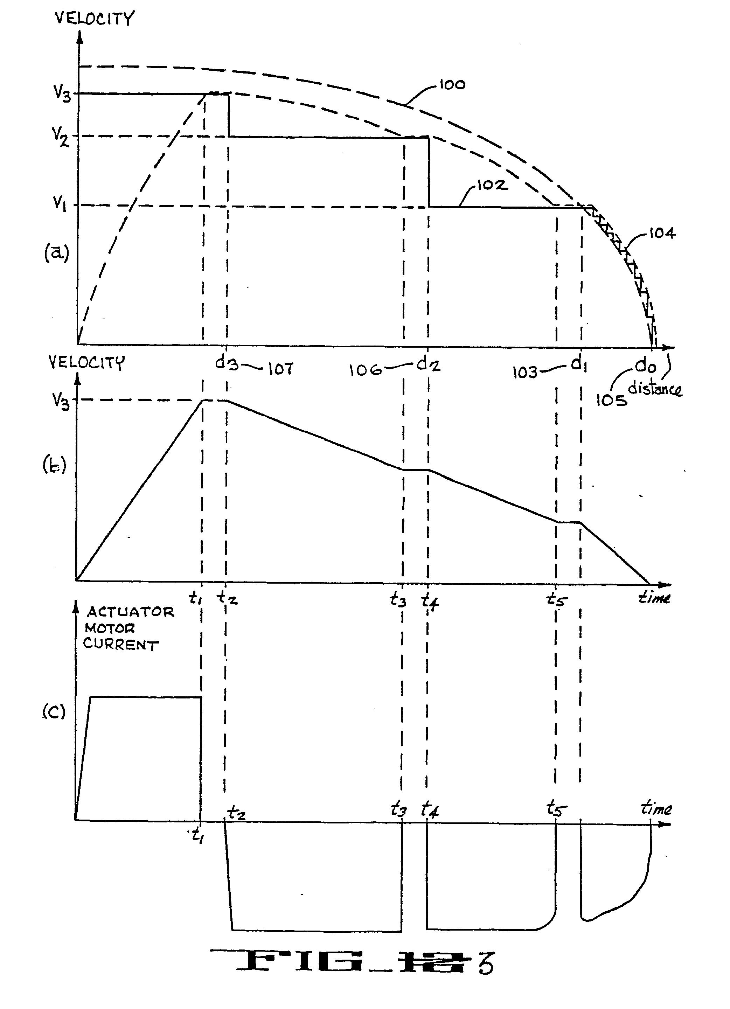

Referring now to Figure 2, curve 104 illustrates the portion of the velocity command profile implemented with the use of a PROM for distances of the movable head assembly to the terminal position less than $d_1$ (103). Curve 102 illustrates the constant velocity value $V_1$ (101) which was previously specified by the velocity command profile for distances of the movable head assembly from the terminal position $d_0$ (105) greater than distance $d_1$ (103).

A velocity command generator incorporating the present invention would, for distances of the movable head assembly from the terminal position $d_0$ (105) greater then distance $d_1$ (103), specify at least one additional discrete velocity step. This is illustrated in Figure 2 by the addition of two velocity steps whereby a maximum velocity of $V_3$ is specified by the new velocity command profile for distances greater than $d_3$ (107) of the movable head assembly from the terminal position of $d_0$. For distances of the movable head assembly from the terminal position $d_0$ between $d_3$ and $d_2$, the new velocity command profile specifies a maximum velocity of $V_2$. For distances of the movable head assembly from the terminal position $d_0$ between $d_2$ and $d_1$, the new velocity command profile specifies a maximum velocity of the movable head assembly of $V_1$.

The operation of the velocity command generator employing the present invention can best be understood by reference to Figure 3. Figure 3(a) illustrates a velocity command profile of a velocity command generator incorporating the present invention, as well as the resulting velocity/distance profile of a movable head assembly in response thereto. Figures 3(b) and 3(c) illustrate the corresponding actual velocity versus time and the current supplied to actuator 22 versus time respectively.

Assuming the movable head assembly is initially at a distance corresponding to the intersection of the distance and velocity axis of Figure 3(a) from a terminal position represented by $d_0$, a positive current is initially applied to actuator 22, as illustrated in Figure 3(c). As a result of the positive current, the velocity of the movable head assembly linearly increases as illustrated in Figure 3(b), up to time $t_1$, i.e., until the velocity of the movable head assembly reaches velocity $V_3$ at time $t_1$. The movable head assembly consquently accelerates in an open loop fashion until the velocity of the movable head assembly equals velocity level $V_3$. As velocity level $V_3$ is the maximum velocity permitted by the velocity command generator, once velocity $V_3$ is attained by the movable head assembly, closed loop control ensues thereafter. In particular, after time $t_1$, the actuator motor current is reduced to zero, and the velocity of the movable head assembly, in this example, remains essentially equal to $V_3$ until the movable head assembly crosses distance $d_3$ whereupon the velocity command profile specifies a new velocity for the movable head assembly, i.e. velocity level $V_2$. As the current velocity of the movable head assembly is greater than velocity $V_2$, a deceleration "bang" is produced by the application of a constant negative current to actuator 22, as illustrated in Figure 3(c). This constant negative current applied to the actuator results in a linear decrease in the velocity of the movable head assembly, as illustrated in Figure 3(b) beginning at time $t_2$. The negative current is supplied to the actuator until the velocity of the movable head assembly matches that specified by the velocity command profile, i.e., the velocity of the movable head assembly reaches velocity level $V_2$ at time $t_3$, at which point the actuator motor current is again reduced to zero, as shown in Figure 3(c). This condition continues to exist in this example until the movable head assembly crosses distance $d_2$ whereupon the velocity command profile specifies a new velocity for the movable head assembly, i.e., velocity level $V_1$. As the velocity of the movable head assembly is greater than velocity $V_1$, a second deceleration "bang" is produced by the application of a constant negative current to actuator 22, as illustrated in Figure 3(c). This constant negative current results in a linear decrease in the velocity of the movable head assembly, as illustrated in Figure 3(b), beginning at time $t_4$. The negative current is supplied to the actuator until the velocity of the movable head assembly matches that specified by the velocity command profile, i.e., the velocity of the movable head assembly reaches velocity level $V_1$, at time $t_5$, at which point the actuator current is again reduced to zero. This condition continues to exist until the movable head assembly crosses distance $d_1$, whereupon the velocity distance profile is specified by values for velocity stored in the PROM as illustrated by curve 104 in Figure 3(a). Thereafter, deceleration of the movable head assembly continues in a cloed loop fashion until the velocity of the movable head assembly reaches zero at the position $d_0$.

An implementation of a velocity command generator incorporating the present invention is illustrated in Figure 4.

Referring to Figure 4, a fractional crossing detector 140, upon receipt of information from demodulator 28, functions to produce an output 141 for each fractional track which is crossed by the movable head assembly. The number of fractional crossings detected will vary with the particular design of the system incorporating this invention, but in the preferred embodiment was two, i.e., fractional crossing detector 140 would produce an output signal 141 which changes between binary states twice for each cylinder track crossed by the movable head assembly. PROM 142 functions to store values for velocity, and in response to the specification of an address, would produce the corresponding digital word stored therein, i.e., the corresponding value for velocity. Digital to analog converter 144 functions to convert the binary word supplied to it to a corresponding analog voltage. Digital magnitude comparator 146 functions to compare the digital number from difference counter 34 with several predefined numbers, and generates output signals when the number from difference counter 34 is greater than the respective predefined numbers. Amplifiers 148 and 150 function to provide output signals equal to the input signal multiplied by a predefined amount. Switches $S_1$ and $S_2$ operate in response to signals from digital magnitude comparator 146 to connect the output signal produced by amplifiers 148 and 150 respectively to the input of summer 156. Summer 156 operates to produce an analog output signal 160 equal to the mathematical sum of the respective inputs thereto. The output from summer 156 would represent a desired velocity command profile, and would be presented as an input to summing means 68. Summing means 68 would function to subtract from the desired velocity command profile the signal 31 from tachometer 30 to produce the error signal 70 for power amplifier 26 (Figure 1).

A velocity command generator incorporating the present invention as illustrated in Figure 4 operates in the following manner. In response to signal 29 produced by demodulator 28 from information from the servo data head, cylinder crossing detector 32 produces a single pulse in response to each cylinder which is crossed. Concurrently the output from fractional track crossing detector 140 changes state a number of times, in response to each track which is crossed. Difference counter 34, in response to position command 37 and the signal from cylinder crossing detector 32, produces a digital word representative of the distance between the current position of the movable head assembly and the desired terminal position. It will be observed that as the output from fractional track crossing detector 140 changes state a number of times for each cylinder which is crossed, the output from factional crossing detector can be considered as the lower order address bits of PROM 142 (least significant bit for half track crossing in the preferred embodiment) in the digital representation of the distance remaining between the actual position of the movable head assembly and the desired terminal position. Using this approach the high order address bit of the digital representation of the distance remaining between the current position of the movable head assembly and the desired terminal position are supplied to the digital magnitude comparator 146. Digital magnitude comparator functions to compare the digital word presented thereto with predefined constants which represent the distances at which a change is desired in the velocity command profile, e.g., $d_3$, $d_2$ and $d_1$. The lower order address bits of the digital representation of the distance remaining are supplied as the higher order address inputs to PROM 142.

The operation of the velocity command generator illustrated in Figure 4 can best be understood way of example. Assume that the movable head assembly is located at a position corresponding to the intersection of the distance and velocity axis in Figure 3(a) from a desired terminal position $d_0$. The desired terminal position will be communicated to the velocity command generator by position command 37. Difference counter 34 will, in response to cylinder crossing pulses generated by cylinder crossing detector 32 produce an output which represents the distance remaining between the current position of the movable head assembly and desired terminal position. As the initial distance of the head carriage assembly from the desired terminal position is greater than $d_3$, $d_2$ and $d_1$, the corresponding output from digital magnitude comparator 146 will cause switches $S_2$ (154) and $S_1$ (152) to be closed; the output from PROM 142 will be set to the value $V_1$ by signal 157. Consequently the inputs to summer 156 are the output from digital to analog converter 144, i.e. an analog signal representative of velocity value $V_1$, and the outputs from amplifiers 148 and 150. The gain of amplifier 148 is a predefined value which when the value of $V_1$ is supplied as an input thereto, produces an output value corresponding to the difference between $V_2$ and $V_1$, e.g., velocity $V_2$—$V_1$. In similar manner, the gain of amplifier 150 is such that when the value of $V_1$ is supplied as an input thereto, the amplifier 150 produces an output value equal to the difference between $V_3$ and $V_2$, e.g., $V_3$—$V_2$, which, when summed with the output of the digital to analog converter 144 and the value produced as an output from amplifier 148, produces an output value corresponding to velocity $V_3$. Consequently in the present example, with the position of the head carriage assembly at the intersection of the distance and velocity axis in Figure 3(a), the output from summer 156 will be the sum of the respective inputs thereto, i.e., the output from digital to analog converter 144 and the two amplifiers 148 and 150, to produce a velocity command 160 equal to $V_3$. The output 160 from summer 156 is then applied to summing means 68 which, after subtraction of the current velocity of the movable head assembly, as reported from tachometer 30, produces a control signal 70 to power amplifier 26, in the manner as previously discussed.

When the position of the movable head assembly relative to the desired terminal position crosses the position indicated by $d_3$ (107), the signal 159 from digital magnitude comparator 146 will cause switch $S_2$ to open, disconnecting amplifier 150 from the corresponding input to summer 156. The summer 156 will have as an input thereto the output from digital to analog converter 144, which because the distance of the movable head assembly for the desired terminal position is still greater than $d_1$, will produce an analog signal equal to velocity $V_1$. Moreover, because the distance of the movable head assembly from the desired terminal position is still greater than $d_2$, signal 158 from digital magnitude comparator 146 will cause switch $S_1$ to be closed. Consequently the analog voltage 160 produced by summer 156 will be a value corresponding to velocity $V_2$.

In a similar fashion, when the position of the movable head assembly relative to the desired terminal position crosses the position indicated by $d_2$, signal 158 from digital magnitude comparator 146 will cause switch $S_1$ to open, disconnecting amplifier 148 from the corresponding input to summer 156. Thereafter summer 156 will have as an input thereto the output from digital to analog converter 144. Because the distance of the movable head assembly from the desired terminal position is still greater than $d_1$, the PROM 142 produces a digital value which, when applied to digital to analog converter 144 will produce an analog signal equal to velocity level $V_1$.

When the position of the movable head assembly relative to the desired terminal position crosses the position indicated by $d_1$, then signal 157 from digital magnitude comparator 146 will result in PROM 142 supplying the desired values for the final part of the velocity profile (curve 104, Figure 2).

Whereas Figure 4 illustrates one implementation of a velocity command generator incorporating the present invention, it is to be understood that other possible implementations different from the one illustrated in Figure 4 are possible. For example, the input to amplifiers 148 and 150 could be supplied directly from a reference voltage rather than from the output of digital to analog converter 144. Likewise, while the above discussion is based on the implementation of a square root velocity distance relationship, it is clear that any curve of interest could be implemented in a similar fashion.

## Claims

1. A velocity profile generator for use in controlling the movement of a movable member from an initial position towards a terminal position, comprising means (34) for producing a signal representing the distance of the member away from the terminal position and characterised by means (146) for comparing the signal with predefined distances ($d_1$, $d_2$, $d_3$) to provide an indication of the distance as within one (e.g. ($d_3$—$d_2$)) of a plurality of ranges of distance, means (142, 144) providing a signal of predetermined value and representing a selected velocity ($V_1$) for one of said ranges ($d_2$—$d_1$) and means (148, 150, 152, 154) responsive to the indication of range to augment the predetermined value whereby to generate a pre-selected velocity value ($V_2$) for the range of distances ($d_3$—$d_2$) embracing the actual distance of the member from the terminal position.

2. A velocity profile generator according to claim 1 in which the signal representing the distance of the member away from the terminal position is in digital form and the means (142, 144) providing the signal of predetermined value responds to a digital value representing the lower limit ($d_1$) of the lowest range of distances.

3. A velocity profile generator according to claim 1 in which for a final range of distances closest to the terminal position the velocity profile is generated by a digital data store (142) which is addressed according to the signal representing distance away from the terminal position to provide a respective velocity value from a set of sorted velocity values.

4. A velocity profile generator according to claims 2 and 3 in which the digital data store (142) also provides the said signal of predetermined value.

5. Apparatus for controlling the movement of a movable member (18) towards a terminal position, comprising means (34) for producing a signal representing the actual distance of the member from the terminal position, drive means (26, 24, 22) for the member and means (28, 30) for detecting the actual velocity of the member, characterised by means (146—156) for comparing the said signal with defined distances ($d_1$, $d_2$, $d_3$) and for providing, for each of a plurality of consecutive ranges ($d_3$—$d_2$, $d_2$—$d_1$) of distance of the member from the terminal position, a respective selected velocity value ($V_1$ $V_2$) and a control arrangement which for each range causes the application of predetermined energisation to the drive means to reduce the velocity of the member to the selected value associated with the range.

6. Apparatus according to claim 5 in which the energisation of the drive means is substantially constant while the velocity of the member is being reduced in any of the said ranges and is reduced to allow the member to maintain the respective selected value of velocity for any remaining part of the range.

7. Apparatus according to claim 5 or claim 6 in which for providing the selected velocity value there are provided means (142, 144) for generating a velocity value for the lowest range ($d_2$—$d_1$) and means (148—156) for augmenting the said velocity value, in accordance with a signal denoting which range embraces the actual distance of the member from the terminal position, to provide the respective selected velocity value.

## Patentansprüche

1. Geschwindigkeitsprofilgenerator zur Verwendung beim Regeln der Bewegung eines beweglichen Elementes aus einer Aufangsstellung in eine Endstellung mit einer Anordnung (34) zur Erzeugung eines Signals, das den Abstand des Elementes von der Endstellung repräsentiert, gekennzeichnet durch eine Anordnung (146) zum Vergleich des Signals mit vordefinierten Abständen ($d_1$, $d_2$, $d_3$) zwecks Erzeugung einer Anzeige des Abstandes als in einem Abstandsbereich (beispielsweise ($d_3$—$d_2$)) einer Vielzahl von Abstandsbereichen liegend, eine Anordung (142, 144) zur Erzeugung eines Signals mit einem vorgegebenen Wert, das eine ausgewählte Geschwindigkeit ($V_1$) für einen der Bereiche ($d_2$—$d_1$) repräsentiert und durch eine von der Bereichsanzeige angesteuerte Anordung (148, 150, 152, 154) zur Erhöhung des vorgegebenen Wertes zwecks Erzeugung eines vorgewählten Geschwindigkeitswertes ($V_2$) für den den tatsächlichen Abstand des Elementes von der Endstellung umgebenden Bereich von Abständen ($d_3$—$d_2$).

2. Geschwindigkeitsprofilgenerator nach Anspruch 1, bei dem das den Anstand des Elementes von der Endstellung repräsentierende Signal in Digitalform vorliegt und die das Signal mit vorgegebenem Wert erzeugende Anordnung (142, 144) auf einen Digitalwert anspricht, welcher die untere Grenze ($d_1$) des kleinsten Abstandsbereiches repräsentiert.

3. Geschwindigkeitsprofilgenerator nach Anspruch 1, bei dem das Geschwindigkeitsprofil für einen der Endstellung nächsten Endbereich von Abständen durch einen digitalen Datenspeicher (142) erzeugt wird, der durch das den Abstand von der Endstellung repräsentierende Signal adressiert wird, um einen entsprechenden Geschwindigkeitswert aus einem Satz von gespeicherten Geschwindigkeitswerten zu erzeugen.

4. Geschwindigkeitsprofilgenerator nach Anspruch 2 und 3, bei dem der digitale Datenspeicher (142) auch das Signal mit vorgegebenem Wert liefert.

5. Einrichtung zur Regelung der Bewegung eines beweglichen Elementes (18) zu einer Endstellung hin mit einer Anordnung (34) zur Erzeugung eines den tatsächlichen Abstand des Elementes von der Endstellung repräsentierenden Signal und mit einer Treiberanordnung (26, 24, 22) für das Element und einer Anordnung (28, 30) zur Detektierung der tatsächlichen Geschwindigkeit des Elementes, gekennzeichnet durch eine Anordnung (146 bis 156) zum Vergleich des Signals mit definierten Abständen ($d_1$, $d_2$, $d_3$) sowie zur Erzeugung eines entsprechenden ausgewählten Geschwindigkeitsbereiches ($V_1$, $V_2$) für jeden einer Vielzahl aufeinanderfolgender Abstandsbereiche ($d_3$—$d_2$, $d_2$—$d_1$) des Elementes von der Endstellung und durch eine Regelanordnung, welche für jeden Bereich die Einspeisung einer vorgegebenen Erregung in die Treiberanordnung bewirkt, um die Geschwindigkeit des Elementes auf den dem Bereich zugeordneten ausgewählten Wert zu reduzieren.

6. Einrichtung nach Anspruch 5, bei der die Erregung der Treiberanordnung im wesentlichen konstant ist, wenn die Geschwindigkeit des Elementes in einem der Bereiche reduziert wird, und reduziert wird, damit das Element für jeden verbleibenden Teil des Bereichs den entsprechenden gewählten Geschwindigkeitswert behalten kann.

7. Einrichtung nach Anspruch 5 oder 6, in der zur Realisierung des gewählten Geschwindigkeitswertes eine Anordnung (143, 144) zur Erzeugung eines Geschwindigkeitswertes für den kleinsten Bereich ($d_2$—$d_1$) sowie eine Anordnung (148 bis 156) zur Erhöhung des Geschwindigkeitswertes als Funktion eines Signals, das den den tatsächlichen Abstand des Elementes von der Endstellung umgebenden Bereich angibt, zwecks Realisierung des entsprechenden ausgewählten Geschwindigkeitswertes vorgesehen sind.

## Revendications

1. Un générateur de profil de vitesse prévu pour l'utilisation dans la commande du mouvement d'un élément mobile, depuis une position initiale vers une position finale, comprenant des moyens (34) destinées à produire un signal représentant la distance de l'élément par rapport à la position finale, et caractérisé par des moyens (146) destinés, à comparer le signal avec des distances prédéfinies ($d_1$, $d_2$, $d_3$), pour fournir une indication de la distance qui spécifie que cette distance est dans une plage (par exemple ($d_3$—$d_2$)) parmi un ensemble de plages de distance, des moyens (142, 144) qui produisent un signal de valeur prédéterminée représentant une vitesse sélectionnée ($V_1$) l'une des plages précitées ($d_2$—$d_1$), et des moyens (148, 150, 152, 154) qui réagissent à l'indication de plage en augmentant la valeur prédéterminée, pour générer ainsi une valeur de vitesse présélectionnée ($V_2$) pour la plage de distance ($d_3$—$d_2$) qui englobe la distance réelle de l'élément par rapport à la position finale.

2. Un générateur de profil de vitesse selon la revendication 1, dans lequel le signal représentant la distance de l'élément par rapport à la position finale est sous forme numérique, et les moyens (142, 144) produisant le signal de valeur prédéterminée réagissent à une valeur numérique représentant la limite inférieure ($d_1$) de la plage de distance la plus basse.

3. Un générateur de profil de vitesse selon la revendication 1, dans lequel, pour une plage de distance finale la plus proche de la position finale, le profil de vitesse est généré par une mémoire de données numériques (142), qui est adressée conformément au signal représentant la distance par rapport à la position finale, de façon à produire une valeur de vitesse respective à partir d'un ensemble de valeurs de vitesse enregistrées.

4. Un générateur de profil de vitesse selon les revendications 2 et 3, dans lequel la mémoire de données numériques (142) fournit également le signal précité de valeur prédéterminée.

5. Dispositif destiné à commander la mouvement d'un élément mobile (18) vers une position finale, comprenant des moyens (34) destinés à produire un signal représentant la distance réelle de l'élément par rapport à la position finale, des moyens d'entraînement (26, 24, 22) pour l'élément, et des moyens (28, 30) destinés à détecter la vitesse réelle de l'élément, caractérisé par des moyens (146—156) destinés à comparer le signal précité avec des distances définies ($d_1$, $d_2$, $d_3$) et à produire, pour chaque plage d'un ensemble de plages de distance consécutives ($d_3$—$d_2$, $d_2$—$d_1$) de l'élément par rapport à la position finale, une valeur de vitesse sélectionnée respective ($V_1$, $V_2$), et par un dispositif de commande qui, pour chaque plage, provoque l'application d'une excitation prédéterminée aux moyens d'entraînement, pour réduire la vitesse de l'élément à la valeur sélectionnée qui est associée à la plage.

6. Dispositif selon la revendication 5, dans lequel l'excitation des moyens d'entraînement est pratiquement constante pendant que la vitesse de l'élément est réduite dans l'une quelconque des plages, et l'excitation est réduite pour permettre à l'élément de conserver la valeur de vitesse sélectionnée respective pour toute partie restante de la plage.

7. Dispositif selon la revendication 5 ou la revendication 6, dans lequel il existe, pour produire la valeur de vitesse sélectionnée, des moyens (142, 144) destinées à générer une valeur de vitesse pour la plage la plus basse ($d_2$—$d_1$), et des moyens (148—156) destinés à augmenter ladite valeur de vitesse, conformément à un signal qui désigne la plage qui englobe la distance réelle de l'élément par rapport à la position finale, dans le but de produire la valeur de vitesse sélectionne respective.

# 0 103 493

**DATA**

ACTUATOR CONTROL — 36 | 70 | POWER AMPLIFIER — 26 | ACTUATOR — 24 | 22 | 18 | 14 | 10

TACHOMETER — 30 | 31 | DEMODULATOR — 28 | 12 | 20

DIFFERENCE COUNTER — 34 | 35 | CYLINDER DETECTOR — 32 | 29 | ROTARY DRIVE MOTOR — 16

POSITION COMMAND — 37

**FIG_1**

1

FIG_#2

FIG_#4

FIG_13